Europäisches Patentamt

European Patent Office

Office européen des brevets

(19)

(11) Publication number: **0 089 658**
A2

(12) # EUROPEAN PATENT APPLICATION

(21) Application number: **83102775.0**

(22) Date of filing: **21.03.83**

(51) Int. Cl.³: **B 62 D 63/06**
**B 62 D 13/04, B 60 P 1/64**

(30) Priority: **23.03.82 IT 2127082 U**

(43) Date of publication of application:
**28.09.83 Bulletin 83/39**

(84) Designated Contracting States:
**BE CH DE FR GB IT LI NL**

(71) Applicant: **S.A.I.- SOCIETA' AERONAUTICA ITALIANA S.p.A.**
**Via Roma, 15/D**
**I-06065 Passignano sul Trasimeno(IT)**

(72) Inventor: **Frontoni, Antonio**
**Via della Vittoria**
**I-06065 Passignano sul Transimeno(IT)**

(74) Representative: **Dr. Ing. A. Racheli & C.**
**Viale San Michele del Carso, 4**
**I-20144 Milano(IT)**

(54) **A universal trailer for lifting and carrying containers, flatcars and in general self-supporting structures of any length.**

(57) The trailer is divided into two units, particularly a front unit (20) comprising the drawbar (31) and an axle (21), and a rear unit (10) comprising the other axle (11), each of said units (10, 20) being provided with connecting means (12, 22) engaging each one end of the self-supporting structure (C) and the connecting means of the other unit, and operating means (33, 43) acting between the connecting means (12, 22) and the respective axle (11, 21) by changing their mutual distance.

FIG.2

EP 0 089 658 A2

Croydon Printing Company Ltd.

Applicant:

S.A.I. - SOCIETA' AERONAUTICA ITALIANA S.p.A.

IT - 06065 PASSIGNANO SUL TRASIMENO

Via Roma, 15/D

"A UNIVERSAL TRAILER FOR LIFTING AND CARRYING CONTAINERS, FLATCARS AND IN GENERAL SELF-SUPPORTING STRUCTURES OF ANY LENGTH".

This invention relates to a universal trailer for both lifting and transporting a load, said load consisting of containers, flatcars or other self-supporting structures of any size. Hereinafter, when referring to containers, the latter will be related to any of the above mentioned self-supporting structures.

Trailers are already known for containers or other self-supporting structures, but such trailers normally have a definite length, and accordingly use thereof is restricted to each specific container or structure. There are other transport equipments simpler, than normal trailers, which substantially comprise two axles. However, they also have the disadvantage to fit only one type of container, so that a universal use thereof cannot be provided. They also cannot be used without the container.

Therefore, it is the object of the present invention to provide a universal trailer for both lifting and carrying containers, flatcars or other self-supporting structures of any size.

Said object has been achieved by providing a trailer divided into two units, namely a front unit comprising the drawbar and one axle, and a rear unit comprising the other axle, each of said units being provided with connecting means engaging each a container end and the connecting means of the other unit and operating means, for instance hydraulic cylinders, acting between the connecting means and the respective axle by changing their mutual distance. Such a trailer can lift a container of any length and carry it. It can also form a trailer in the absence of the container or structure.

Moreover, a trailer according to the present invention is provided with both braking axles. The electric and pneumatic connections are carried out by means of a flexible long cord or cable which is passed on the container, or rolled up when the two units are joined.

An improvement consists in providing independently adjustable suspensions, preferably pneumatic enabling the load to be levelled, should its center of gravity be not centered.

The connecting means may consist each of a hinge coupler placed downwardly and an upper fastening means.

A further improvement consists in providing two connecting means in each unit and in placing them in front of the container ends.

Preferably caster wheels are also provided in each unit. They are connected to the unit by means of a positioning means, for instance a hydraulic jack controlled by a hand driven pump. Caster wheels and jack greatly by facilitate the connection and disconnection of the units with the container.

A further improvement consists in providing both units with a steering axle, that is with a hydraulic device capable of transfering steering from the front axle to the rear one. Preferably the exclusion of this possibility is also provided.

It is also provided to control steering in the units by means of the pump which feeds the operating means. This feature enables a very precise slow move of the trailer.

This invention will now be described in detail with reference to an exemplary embodiment, as shown in the figures of the accompanying drawings, in which:

Fig. 1 is a top view of a trailer transporting a standard type of container;

Fig. 2 is a side view of said trailer, wherein a wheel has been eliminated;

Fig. 3 is a view showing said trailer, in which the two units have been joined, so that the trailer can move also without a container or self-supporting structure; and

Fig. 4 is a diagrammatic view showing the hydraulic system.

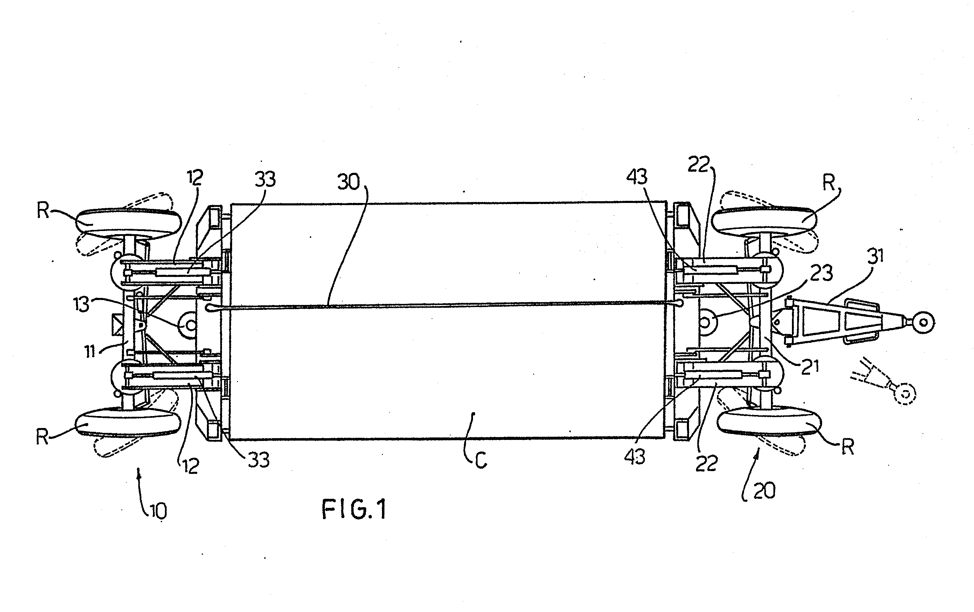

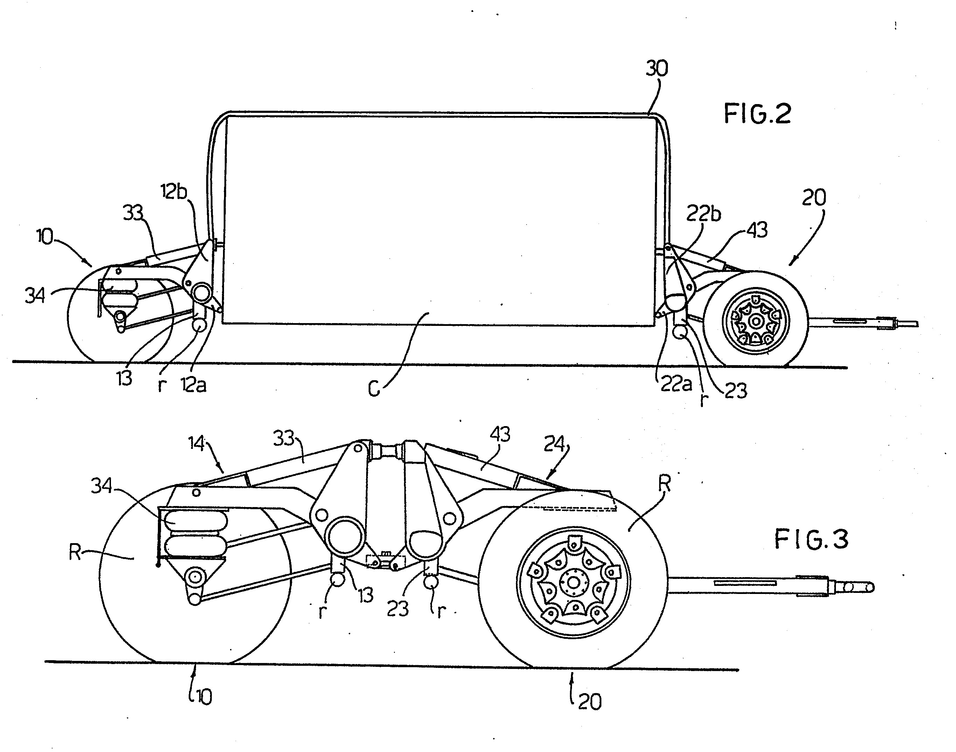

Referring first to Figs. 1 and 2, it will be seen that a trailer comprises two units: a rear unit 10 and a front unit 20. Both of them include an axle 11 and 21 respectively, provided with wheels R. Each of said two units are provided with two                 connecting means 12 and 22, each comprising a lower hinge           coupler 12a and 22a and an upper fastening means 12b and 22b.

Two hydraulic cylinders 33 and two cylinders 43 are placed between the connecting means 12 and 22 and the respective axle 11 e 21. They change the mutual distance between connecting means and axle, thus lifting the container C. The front unit 20 is a steering unit controlled by a drawbar 31.

When the units are not connected to each other nor to the container they bear on wheels R and on caster wheels r. Between caster wheels r and connecting means 12 and 22 positioning means 13 and 23 respectively are provided. They are preferably controlled by manual pumps. The connecting means bear on each axle by means of pneumatic shock absorbers or suspensions 34 (Fig. 2). Each of them can by feeded with a different pressure, so that any load unbalance can be compensated for. Said connecting means 12 and 22 may be joined to one another to provide a trailer, such as that shown in Fig. 3, which can independently move also without any container.

The two units 10 and 20 are interconnected by a big cord or cable comprising the air pipe for pneumatic controls, pipes for hydraulic controls and electric wires. Preferably, this cord is passed over the container or structure and remains always connected to the rear unit, while it can be disconnected from the front unit by means of fast couplings.

Pneumohydraulic control service brakes are provided which preferably act upon the four wheels. The parking brake is of mechanical type and acts upon the two steering wheels of the rear axle.

For obtaining very compact units the compressed air tank for service operation and the oil tank for hydraulic controls are preferably in the constructions of the two units comprising the connecting means.

Coupling of the units with the container and lifting of the container occur as follows:
The two units, if connected as in fig. 3 are disconnected by loosening the screws fastening the connecting means. The two separated units bear on wheels R and r.
By acting on the wheels R, the two units are positioned at the container ends, then jacks 13 and 23 are acted upon to engage the lower hinge couplers 12a and 22a of the units in the corresponding seats of the container.

The fastening means 12b and 22b will then be fastened to the container end, so that a single structure is obtained formed by the two units 10 and 20 and the container C.

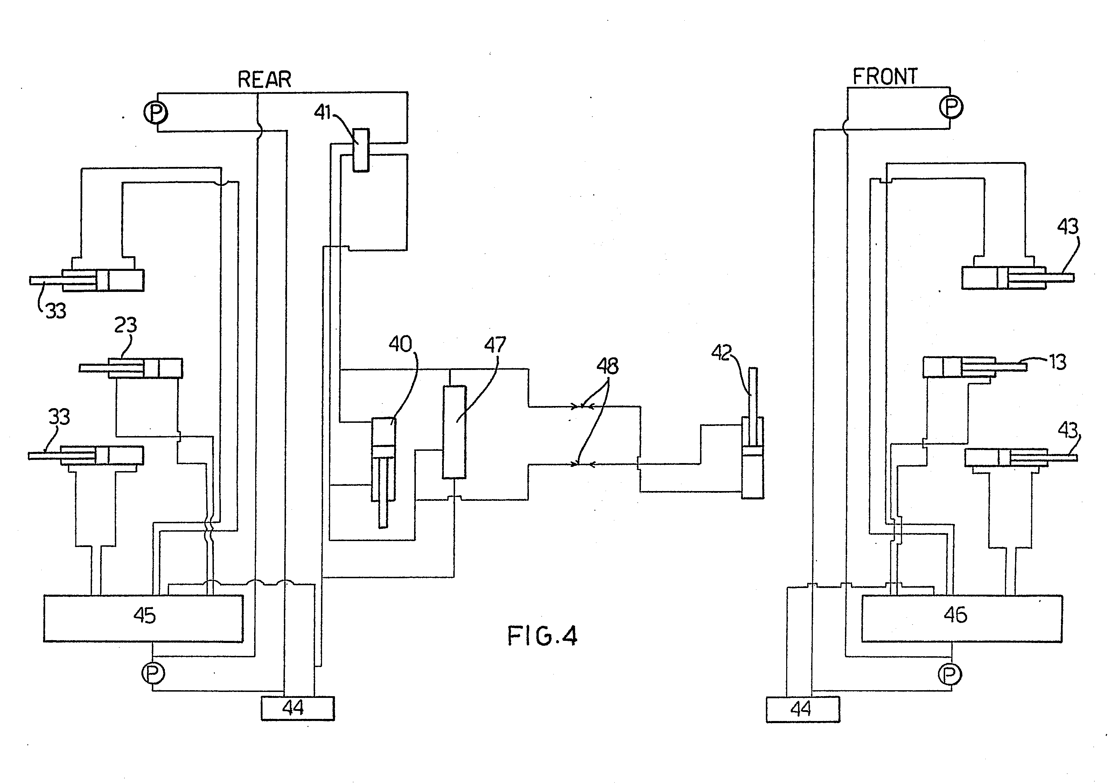

The container C is still on the ground. To lift it hydraulic cylinders 33 and 43 are feeded by the pump P (Fig. 4). By changing the distance between connecting means 12 and 22 and axles 11 and 21, container C is lifted while wheels R come closer.

This operation continues till the four mechanical stops 14 reach their working position. They fix the cylinders in position by overlapping their stems, thus performing also the function of protecting the cylinder stems from accidental shocks.

Compressed air at different pressure can be feeded to the pneumatic suspensions 34, so that the load may be balanced. In particular adjustment is carried out, providing that for each suspension the notches foreseen in the suspensions reach the intended index or mark.

Under such conditions, the road clearance of the container may be for example, 360 mm. The container can be further lifted to a height of about 700 mm, after loosening of mechanical stops 14, 24 which enables to get over ramps, steeps slopes (40% with a wheel base of 7.2 m), fords, etc.

The disconnection operation takes place by reversing the steps of the connection operation.

By distributor levers in up position, the container C is slightly lifted to allow disengagement of the mechanical stops 14 and 24.

Then, the distributor leversff are moved to down position and the container is lowered by acting upon the controls of hydraulic cylinders 33 and 43.

When the container or other self-bearing structure comes in touch with ground, the upper coupling screws or bolts are released, and upon unscrewing thereof the two jacks 13 and 23 are withdrawn until the caster wheels $\underline{r}$ touch the ground.

Then, the two units are moved near to each other by approaching their connecting means which will be fastened to each other, forming again the trailer of Fig. 3.

The hydraulic steering system will now be described with reference to Fig. 4.

The distribuitor 41 enables the connection of front steering jack 40 and rear steering jack 42 with the compensation tank 44, also used for container lifting.

When the distributor lever 41 is in an intermediate position the repeater steering is operating and the assembly comprising said two jacks and relative pipings form a self-compensated closed circuit.

When desiring to cut off, under determined conditions, the movement of the rear steering, the front jack should be connected with the compensation tank 44, cutting off the rear jacks. This is done by disconnecting the fast couplings and opening the discharge valves to the tank.

The alignment for the rear wheels is mechanically obtained by means of a blocking pin, while the rear hydraulic circuit is excluded from the switch.

However, exclusion of the doble steering is obtained by simply acting on the distribuitor, upon wheel alignment, without any use of a pin.

Said tank 44 remains at atmospheric pressure, being provided with an air recovery valve enabling venting for increase in pressure in the tank and recovery in the opposite steps. Thus, uniformity of behaviour is assured in both directions.

For slow precise moves of the trailer, for instance during an embarkation, the distributor 41 may connect pump P which normally feeds cylinders 33 and 43 with steering jacks 40 and 42.

S.A.I. - SOCIETA' AERONAUTICA ITALIANA S.p.A.

IT - 06065 PASSIGNANO SUL TRASIMENO (Italy)

C L A I M S

1.     A trailer for lifting and carrying self-supporting structures of any size, characterized in that such a trailer is divided into two units, particularly a front unit (20) comprising a drawbar (31) and an axle (21) and a rear unit (10) comprising the other axle (11), each of said units (10, 20) being provided with connecting means (12, 22) engaging each one end of the self-supporting structure (C) and the connecting means of the other unit, and operating means (33, 43) acting between the connecting means (12, 22) and the respective axle (11, 21) by changing their mutual distance.

2.     A trailer as in Claim 1 characterized in that the operating means are hydraulic cylinders (33, 43).

3.     A trailer according to Claim 1, characterized in that both of said axles (11, 21) are braking axles and that the electric and pneumatic connections are made by means of a long flexible cord or cable (30) which is passed over the self-supporting structure (C), or rolled up when the two units (10, 20) are joined.

4. A trailer according to Claim 1, characterized in that independently adjustable suspensions are provided allowing to level out the container, should the latter be loaded non uniformly.

5. A trailer according to Claim 1, characterized in that said connecting means (12, 22) are in number of two for each unit (10, 20), and they are placed in front of the container end.

6. A trailer according to Claim 1 characterized in that each connecting means (12, 22) consists of a hinge coupler (12a, 22a) and a fastening means (12b, 22b).

7. A trailer according to Claim 1, characterized in that in each unit (10, 20) caster wheels (r) are provided and that theese wheels are connected to the unites (10, 20) by means of positioning means (13, 23).

8. A trailer according to Claim 1, characterized in that both units (10, 20) have a steering axle.

9. A trailer according to Claim 8, characterized in that the pump (P) which feeds the hydraulic cylinders (33, 43) may be connected to the steering circuit to carry out precise slow moves of the trailer.

FIG.1

0089658

FIG.2

FIG.3

FIG.4

REAR

FRONT

41

43

33

23

40 47 48 42 13

33 43

45 46

FIG.4

44 44